# EUROPEAN PATENT APPLICATION

(11) **EP 4 571 679 A1**
(43) Date of publication of application: **18.06.2025**
(21) Application number: 23851807.0
(22) Date of filing: 08.08.2023
(51) Int. Cl.: G06V 20/58

(54) **IMAGE PROCESSING METHOD AND APPARATUS, ELECTRONIC DEVICE, AND STORAGE MEDIUM**

(30) Priority: 12.08.2022 CN 202210970119
(71) Applicant: DOUYIN VISION CO., LTD., Beijing 100041 (CN)
(72) Inventor: LU, Minshen, Beijing 100028 (CN); WANG, Zancheng, Beijing 100028 (CN); WANG, Yi, Beijing 100028 (CN); WU, Jingyi, Beijing 100028 (CN)
(74) Representative: Dentons UK and Middle East LLP
(86) International application number: PCT/CN2023/111671
(87) International publication number: WO 2024/032586

(57) **Abstract**

The present disclosure relates to a method, apparatus, electronic device and storage medium for image processing. The method comprises: in response to detecting a triggering operation on a display interface, initiating a camera apparatus to capture, based on the camera device, an image to be processed including a target object (S110); determining a target recognition result corresponding to the target object by analyzing the image to be processed (S120); and retrieving a target prompt content corresponding to the target recognition result to prompt a target user based on the target prompt content (S130).

## Description

The present disclosure claims priority to Chinese Application No. 202210970119.6 filed with the China National Intellectual Property Administration (CNIPA) on August 12, 2022, the content of which is incorporated herein by reference in its entirety.

### FIELD

The present disclosure relates to the technical field of image processing, e.g., to a method, apparatus, electronic device and storage medium for image processing.

### BACKGROUND

Image recognition technology witnesses an increasingly wide range of application in image processing. At present, the recognition of images is rather inaccurate, and users cannot be effectively prompted based on recognition results, leading to the problem of poor universality.

### SUMMARY

The present disclosure provides a method, apparatus, electronic device and storage medium for image processing, so as to achieve the effect of effectively recognizing a collected image and performing a prompt based on a recognition result.

An embodiment of the present disclosure provides a method for image processing, comprising:
in response to detecting a triggering operation on a display interface, initiating a camera apparatus to capture, based on the camera device, an image to be processed including a target object;
determining a target recognition result corresponding to the target object by analyzing the image to be processed; and
retrieving a target prompt content corresponding to the target recognition result to prompt a target user based on the target prompt content.

An embodiment of the present disclosure further provides an apparatus for image processing, comprising:
an image collecting module configured to initiate a camera apparatus to capture, in response to a triggering operation on a display interface and based on the camera device, an image to be processed including a target object;
an image recognizing module configured to determine a target recognition result corresponding to the target object by analyzing the image to be processed; and
a prompting module configured to retrieve a target prompt content corresponding to the target recognition result to prompt a target user based on the target prompt content.

An embodiment of the present disclosure further provides an electronic device, comprising:
one or more processors;
a storage unit configured to store one or more programs,
wherein the one or more programs, when executed by the one or more processors, cause the one or more processors to implement a method for image processing as described by any of the embodiments of the present disclosure.

An embodiment of the present disclosure further provides a storage medium comprising computer-executable instructions, wherein the computer-executable instructions, when executed by a computer processor, perform a method for image processing as described by any of the embodiments of the present disclosure.

### BRIEF DESCRIPTION OF THE DRAWINGS

FIG. 1 illustrates a schematic flowchart of a method for image processing provided by embodiments of the present disclosure;
FIG. 2 illustrates a schematic flowchart of a method for image processing provided by embodiments of the present disclosure;
FIG. 3 illustrates a schematic flowchart of a method for image processing provided by embodiments of the present disclosure;
FIG. 4 illustrates a schematic flowchart of a method for image processing provided by embodiments of the present disclosure;
FIG. 5 illustrates a structural block diagram of an apparatus for image processing provided by embodiments of the present disclosure; and
FIG. 6 illustrates a structural schematic diagram of an electronic device provided by embodiments of the present disclosure.

### DETAILED DESCRIPTION OF EMBODIMENTS

Reference now will be made to the drawings to describe in detail the embodiments of the present disclosure. Although the drawings show some embodiments of the present disclosure, the present disclosure can be implemented in various forms, which should not be construed as being confined to the embodiments illustrated therein. Instead, those embodiments are provided to enable those skilled in the art to understand the present disclosure more thoroughly and completely. It is to be understood that the drawings and embodiments of the present disclosure are provided only as examples, without suggesting any limitation to the protection scope of the present disclosure.

Respective steps in the implementations of the method according to the present disclosure may be performed in different orders and/or performed in parallel. In addition, the method implementations may include additional steps and/or steps omitted. The scope of the present disclosure is not limited thereto.

As used herein, the term "comprise" and its variants are to be read as open-ended terms that mean "includes, but is not limited to." The term "based on" is to be read as "based at least in part on." The term "an embodiment" is to be read as "at least one embodiment," the term "another embodiment" is to be read as "at least one further embodiment;" the term "some embodiments" is to be read as "at least some embodiments." Related definitions of other terms will be provided in the description below.

The terms "first," "second" and the like mentioned in the present disclosure are only used to distinguish different apparatuses, modules or units, rather than limit an order of functions performed by the apparatus, module or unit or limit interdependence.

The terms "one" and "a plurality of" mentioned in the present disclosure are illustrative, not restrictive, and should be understood as "one or more", unless explicitly specified otherwise in the context.

Names of messages or information interacted between a plurality of apparatuses in the embodiments of the present disclosure are illustrative rather than limiting the scope of the messages or information.

Before describing the present technical solution, exemplary illustration is first given to the application scenario. For users with visual impairments, optionally, they can be blind or partially sighted users; or for a user without the recognition ability, the solution of the embodiments of the present disclosure can be used to recognize the content or text in surroundings and to prompt that user.

A corresponding application program may be specially developed based on the solution provided by the embodiments of the present disclosure, or the solution may be integrated in a mobile terminal device to achieve the effect of quickly and conveniently providing services to a user.

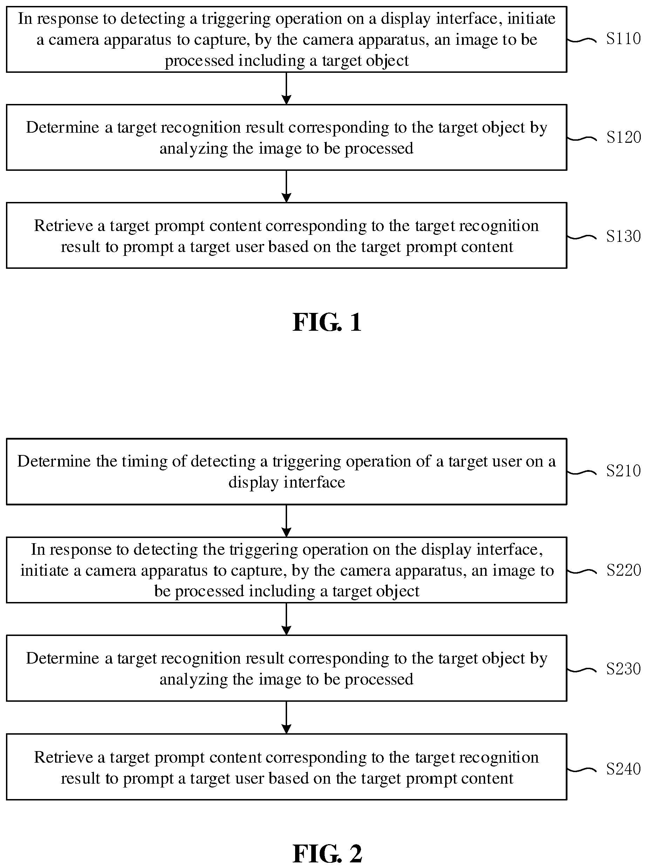

FIG. 1 is a schematic flowchart of a method for image processing provided by an embodiment of the present disclosure. The embodiment of the present disclosure is applicable in a scenario in which image content recognition is performed on a content of a collected image and a user is prompted based on a recognition result. The method may be performed by an apparatus for image processing. The apparatus may be implemented in the form of software and/or hardware, and optionally by an electronic device which can be a mobile terminal, a personal computer (PC) terminal or a server, etc. The method for image processing provided by the embodiment of the present disclosure may be performed by a server, a client, or a client and a server in cooperation.

As shown in FIG. 1, the method comprises the following.

S110, in response to detecting a triggering operation on a display interface, initiating a camera apparatus to capture, based on the camera device, an image to be processed including a target object.

The target object may be any object or scene in the real scene that needs to be recognized, and the image to be processed may be an image containing the target object captured by the camera device. The triggering operation may be to trigger a control in the display interface, or to trigger an area of the terminal device. The camera apparatus may be a camera built in the terminal device.

As an example, for an intelligent terminal device, a trigger control may be disposed on the display interface of the mobile terminal or the display interface of the application program. Upon detecting that the user triggers the trigger control, the camera apparatus built in the terminal device may be automatically called to capture the image to be processed. For a terminal device having function keys, the camera apparatus can be called by triggering a function key on the terminal device, for example, the function keys may include a power key, a dial key, or an answer key, etc. After the camera apparatus is initiated, the target object to be recognized may be captured by the camera device, and a captured image including the target object is taken as the image to be processed.

For a mobile terminal device, in order to increase the startup efficiency of the mobile terminal device for the camera device, an area of the mobile terminal can be set as a hot zone. For example, the back of the mobile terminal can be set as a hot zone, and when the mobile terminal is in a dormant state, if the user clicks the hot zone for a plurality of times consecutively, the camera apparatus of the mobile terminal can be initiated so as to capture the image to be processed.

On the basis of the foregoing technical solution, the display interface as a whole corresponds to an operation control.

In practice, in order to achieve the effect of quickly calling the camera device, an operation control may be disposed on the entire display interface, that is, the entire display screen is an operating hot zone. When a tap on the display screen is detected, it indicates that the camera unit is to be triggered. In this way, a corresponding application program has been developed, the main interface of the program can be used as an operating hot zone, and as long as a triggering operation is detected in the operating hot zone, it means that the camera apparatus needs to be called. In this embodiment, there are various approaches to initiating the camera apparatus in response to detecting a triggering operation on the display interface. This embodiment will present a description to respective approaches.

A first one may be initiating the camera apparatus in response to detecting a single-click operation on the display interface.

As an example, upon detecting a single-click operation of the user on the display interface, a startup control of the camera apparatus may be triggered, and further the camera apparatus is triggered.

A second one may be initiating the camera apparatus in response to detecting a double-click operation on the display interface.

In order to prevent the user from mistouching, a double-click operation trigger mode may be set. When the user double-clicks the display interface, it indicates that the camera apparatus needs to be called to capture the image to be processed, and then the camera apparatus may be initiated to capture the image to be processed.

A third one may be initiating the camera apparatus in response to detecting that a press duration on the display interface reaches a preset duration threshold.

The preset duration threshold may be understood as a preset duration for judging whether to initiate the camera device. Upon detecting that a press duration on the interface exceeds the preset duration, it represents that the camera apparatus needs to be initiated. For example, the preset duration is 2S, and upon detecting that a duration for which the display interface has been pressed exceeds 2S, the camera apparatus may be initiated, and if the press duration is less than 2S, the camera apparatus is not initiated.

A fourth one may be initiating the camera apparatus in response to detecting that a touch trajectory on the display interface meets a preset trajectory.

The preset trajectory refers to a touch trajectory on the display interface, e.g., the preset trajectory is "S" or "Z" shaped. Upon detecting that the touch trajectory of the user on the display interface is consistent with the preset trajectory, it indicates that the camera apparatus needs to be initiated, and then the camera apparatus is initiated.

A fifth one may be initiating the camera apparatus in response to detecting that a hand posture corresponds to at least one preset posture.

The preset posture may be understood as a preset gesture, etc., or, alternatively, a movement posture of the terminal device.

As an example, usually a gyroscope is provided in the terminal device, and during the movement of the terminal device, the movement trajectory of the terminal device can be determined based on the gyroscope. If an action corresponding to the movement trajectory is consistent with the preset posture, then the camera apparatus is initiated. A gesture of the hand holding the terminal device may be determined based on the movement information of the terminal device. As an example, the hand gesture may be raised or lowered. When the hand posture corresponds to the posture of raising the arm, it indicates that the camera apparatus may be initiated.

S120, determining a target recognition result corresponding to the target object by analyzing the image to be processed.

The target recognition result is associated with the target object in the image to be processed. For example, when the target object is traffic lights, the target recognition result may be a state of the traffic lights. Optionally, the state of the traffic lights may be that the green light is on, the red light is on, or the yellow light is on.

As an example, after the image to be processed is collected, an analysis processing may be performed on the image to be processed based on the client, or the image to be processed may be sent to the corresponding server, so that the server performs an analysis processing on the image to be processed to obtain the corresponding target recognition result corresponding to the target object. The analysis processing may be implemented based on a pre-built neural network model, and the light state of the traffic lights may be effectively recognized based on the neural network model. As an example, the image to be processed is an image containing traffic lights, and an analysis processing may be performed on the image to be processed, so as to determine whether the current color of the traffic lights is red or green, and to further determined based on the recognition result whether it is a passable state.

S130, retrieving a target prompt content corresponding to the target recognition result to prompt a target user based on the target prompt content.

The target prompt content refers to a content that needs to be reminded to the target user. Different target recognition results correspond to different prompt contents. For example, the prompt content corresponding to the target recognition result A is content 1, and the prompt content corresponding to the target recognition result B is content 2. The target user may be understood as a user who is currently using the apparatus for image processing or a user who has triggered the display interface.

As an example, prompt contents corresponding to different recognition results may be pre-stored. After the target recognition result is determined, the target prompt content matching the target recognition result may be retrieved from the memory based on the target recognition result, and then the user is prompted accordingly based on the target prompt content by means of voice announcements or vibration.

As an example, the recognition result A corresponds to prompt content 1, and the recognition result B corresponds to prompt content 2. When the target recognition result is determined to be A, prompt content 1 may be retrieved and text corresponding to prompt content 1 may be reported by means of voice announcements so as to prompt the target user.

According to the technical solution provided by the embodiment of the present disclosure, in response to detecting a triggering operation on a display interface, a camera apparatus is initiated to capture, based on the camera device, an image to be processed including a target object; a target recognition result corresponding to the target object is determined by analyzing the image to be processed; and further, a target prompt content corresponding to the target recognition result is retrieved to prompt a target user based on the target prompt content. In this way, problems of inaccurate recognition of images, inability to effectively prompt based on recognition results, as well as in poor universality can be solved. Since the image content can be effectively recognized, a corresponding prompt content can be determined based on the recognition result so as to prompt the user based on the prompt content, which improves the effectiveness and universality of prompts.

FIG. 2 is a schematic flowchart of a method for image processing provided by an embodiment of the present disclosure. Based on the foregoing embodiment, the timing of detecting a triggering operation on a display interface is different, and the present embodiment may elaborate on when to start detecting a triggering operation on a display interface. The implementation thereof may be found in the technical solution of the present embodiment, wherein technical terms identical or corresponding to those in the foregoing embodiment are not repeated.

As shown in FIG. 2, the method comprises the following.

S210, determining the timing of detecting a triggering operation of the target user on the display interface.

Optionally, current position information of the target user is obtained; in response to determining that the current position information corresponds to at least one piece of preset position information, a triggering operation of the target user on the display interface is detected.

The current position information may be understood as a current position of the target user. Usually, the terminal device is provided with a positioning module, based on which the current position information of the target user may be determined. The preset position information may be understood as a geographic position pre-calibrated or preset by developers, and there may be one or more preset position information. Optionally, the preset position may be latitude and longitude information corresponding to the traffic light intersection. It is important for a visually impaired user to know how to pass through traffic lights safely, and the current position information corresponding to the visually impaired user can be obtained. It is determined based on the current position information and the preset position information whether to detect a triggering operation on the display interface.

As an example, a plurality of preset positions may be set in advance. For example, positions of a plurality of traffic light intersections may be determined and used as preset positions. If the current position information corresponds to a position within a neighborhood of the predetermined position, it is determined that the target user is located at the traffic light intersection, and it may be detected whether the target user performs a corresponding triggering operation on the display interface. In this way, it is possible to avoid misrecognition and false triggering, and improve the accuracy of calling the camera apparatus and the effectiveness of image acquisition.

It may be understood that in order to detect a triggering operation of the target user on the display interface in time and accurately and capture and recognize an image, current position coordinate information of the target user may be obtained in real time. Usually the current position information of the target user may be obtained based on a positioning module on the mobile terminal. The obtained current position information is then compared with the at least one piece of preset position information, e.g., it is determined whether the current position information coincides with or is close to one preset position information. If the current position information coincides with or is close to one preset position information, then it may be determined that the current position information corresponds to the preset position information, at which point a triggering operation of the target user on the display interface is detected.

Based on the foregoing technical solution, in response to determining that the current position information corresponds to at least one piece of preset position information, a triggering operation of the target user on the display interface is detected.

In order to increase the universality of the application program in the embodiments of the present disclosure, not only static objects but also dynamic moving subjects can be recognized based on the application program. For example, in the case of online car-hailing, some visually impaired users are unable to identify whether the current vehicle is the agreed target vehicle, resulting in situations where they get into the wrong vehicle. Therefore, it may be determined whether the incoming vehicle is a target vehicle, i.e., the target identification result may be determined, based on the solution provided by the embodiments of the present disclosure. Subjects that have relative displacements to the target user can all be treated as target moving subjects. Usually target moving subjects are different in different application scenarios. For example, in a scenario of online car-hailing, the target moving subject may be understood as the target vehicle currently agreed by the target user.

As an example, after the target moving subject establishes an agreed relationship with the target user, the target moving subject may send, based on a communication network, its position information to the terminal device used by the target user, and the terminal device may compare the position information of the target moving subject with the target position information of the target user in real time. When the current position information of the target moving subject corresponds to the target position information, it may be that the distance between the current position information of the target moving subject and the target position information is less than 20m. In this case, the target user may be prompted by means of voice or vibration that the target moving subject is close to the current position. Thus, the display interface may be triggered to capture an image to be processed including the target moving subject.

S220, in response to detecting the triggering operation on the display interface, initiating the camera apparatus so as to capture an image to be processed including a target object.

Based on the foregoing technical solution, before detecting the triggering operation of the target user on the display interface, the method further comprises: initiating a target application to enter a main interface of the target application, and initiating the camera apparatus in response to detecting a triggering operation of the target user on the main interface;
wherein the target program may be understood as an application program specifically developed to implement the embodiments of the present disclosure, and the main interface corresponds to the display interface.

As an example, before detecting the triggering operation of the target user on the display interface, a target program may be initiated to enter a main interface of the target application, i.e., the display interface. After detecting the triggering operation on the display interface, the camera apparatus may be initiated so as to capture, based on the camera device, an image to be processed including the target object.

Based on the foregoing technical solution, after initiating the target application, the method further comprises: performing a program startup prompt to the target user to trigger an operation on the display interface based on the program startup prompt;

wherein the program startup prompt comprises at least one of: a voice prompt, or a vibration prompt, and a content of the voice prompt comprises at least one of: a content of a triggering operation of initiating the camera device, or a content prompt for entering a startup interface.

As an example, for a visually impaired user, there may be cases in which the user performs a touch operation before the application program is initiated, at which point the triggering operation on the display interface of the application program cannot be implemented. Therefore, after the application program is initiated, a voice or vibration prompt may be performed to the target user so as to effectively trigger the display interface and achieve the effect of initiating the camera device. Optionally, after the application program is initiated, the voice announcement can be "Hello, XX application has been initiated, you can tap on the display to take a picture". Or after the application program is initiated, it may be reminded that the application program has been initiated, through vibration of the terminal device.
S230, determining a target recognition result corresponding to the target object by analyzing the image to be processed;
S240, retrieving a target prompt content corresponding to the target recognition result to prompt a target user based on the target prompt content.

With the technical solution of the embodiment of the present disclosure, the timing of detecting the triggering operation of the target user on the display interface may be determined corresponding to different application scenarios. Thus, the triggering operation of the target user on the display interface may be effectively obtained, the effect of effectively calling the corresponding camera apparatus and capturing the image to be processed including the target object is achieved, and the effectiveness of image capturing is increased.

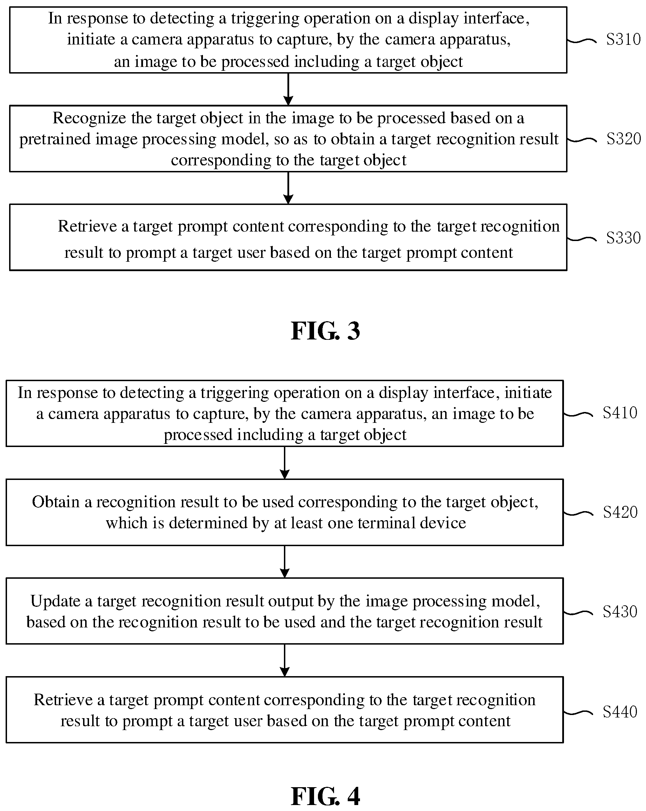

FIG. 3 is a schematic flowchart of a method for image processing provided by an embodiment of the present disclosure. Based on the foregoing embodiments, a target object in the image to be processed may be recognized based on a pretrained image processing model, target recognition results corresponding to different target objects may be determined, and a prompt may be performed based on the target recognition result. The implementation thereof can be found in the technical solution of the present embodiment, wherein technical terms identical or corresponding to those in the foregoing embodiments are not repeated.

As shown in FIG. 3, the method comprises the following.

S310, in response to detecting a triggering operation on a display interface, initiating a camera apparatus to capture, based on the camera device, an image to be processed including a target object.

S320, recognizing a target object in the image to be processed based on a pretrained image processing model, so as to obtain a target recognition result corresponding to the target object.

Wherein the image processing model may be pretrained for determining a target recognition result corresponding to the image to be processed.

A large number of images and corresponding recognition results may be treated as a training set in advance, and a model for determining a target recognition result corresponding to the image to be processed may be trained based on the training set, as an image processing model.

As an example, the image to be processed may be used as an input to the image processing model. The image processing model may perform processing on the image to be processed, to recognize a target object in the image to be processed. Finally, the image processing model may output a target recognition result corresponding to the target object in the image to be processed.

Based on the foregoing technical solutions, the target object is traffic lights, and recognizing the target object in the image to be processed based on the pretrained image processing model to obtain the target recognition result corresponding to the target object comprises:
inputting the image to be processed to the image processing model to determine a pass state corresponding to the traffic lights based on the image processing model, and using the passage state as the target recognition result;
wherein the pass state comprises a passable state or an impassable state.

As an example, when the target object is traffic lights, the image to be processed may be input to the image processing model. The image processing model may identify the traffic lights in the image to be processed, i.e., identify whether the current light is red or green, and then output the pass state corresponding to the color of the traffic lights, and take the passing state as the target recognition result. Optionally, if the traffic light in the image to be processed is red, then an output result of the image processing model is an impassable state; on the contrary, if the traffic light in the image to be processed is green, then an output result of the image processing model is a passable state.

Based on the foregoing technical solutions, the target object is a target vehicle or text message, and recognizing the target object in the image to be processed based on the pretrained image processing model to obtain the target recognition result corresponding to the target object comprises: recognizing a text content or vehicle message of the target object in the image to be processed based on the image processing model, so as to obtain a target recognition result corresponding to the target object.

As an example, when the target object is a target vehicle, vehicle information in the image to be processed may be identified based on the image processing model, such as the vehicle model, the color, and the number plate, etc., and the model information, the color information, and the number plate information obtained after the identification is used as the target identification result. When the target object is text information, the text information can be captured to obtain an image to be processed containing the text information, the image is input into an image recognition model, the image recognition model can recognize the text in the image, and the recognized text content can be used as the target recognition result.

S330, retrieving a target prompt content corresponding to the target recognition result to prompt a target user based on the target prompt content.

With the technical solution provided by the embodiment of the present disclosure, the target object in the image to be processed may be recognized based on the image processing model, so as to determine a target prompt content based on the target recognition result and further prompt the target object based on the target prompt content. This not only increases the recognition accuracy but also improves the effectiveness.

FIG. 4 is a schematic flowchart of a method for image processing provided by an embodiment of the present disclosure. Based on the foregoing embodiments, in order to increase the accuracy of recognition results, a target recognition result may be determined in conjunction with a recognition result of the other terminal device. The implementation thereof can be found in the technical solution of the present embodiment, wherein technical terms identical or corresponding to those in the foregoing embodiments will not be repeated.

As shown in FIG. 4, the method comprises the following.

S410, in response to detecting a triggering operation on a display interface, initiating a camera apparatus to capture, based on the camera device, an image to be processed including a target object.

Based on the foregoing technical solution, after initiating the camera apparatus to enter a capture interface, the method further comprises:
in response to detecting that a triggering operation on the capture interface satisfies a condition of returning to the display interface from the capture interface, returning to the display interface, and reporting a prompt message of returning to the display interface.

As an example, after initiating the camera device, it is possible to enter the capture interface, and after capturing or there is a need to stop capturing, a triggering operation may be performed on the capture interface in order to return to the display interface from the capturing interface. A condition of returning to the display interface from the capture interface may be: a swipe operation or a double-tap operation on the capture interface. Upon detecting one or more of these operations, it is possible to return to the display interface from the capture interface and report a prompt in the form of voice.

S420, obtaining a recognition result to be used corresponding to the target object which is determined by at least one terminal device.

Wherein the terminal device may be a device for recognizing or capturing the target object, at which point the terminal device is distinguished from the terminal device used by the target user. There may be one or more terminals. In order to increase the accuracy of the target recognition result, as many recognition results recognized by other terminal devices as possible may be obtained. The recognition results recognized by other terminal devices are used as the recognition results to be used.

It may be understood that in the process of determining the target recognition result of the image to be processed, a target recognition result consistent with the preset position information and recognized by other terminal device at the same moment or within a predetermined interval, optionally, 300ms, may be obtained as the recognition result to be used.

Based on the foregoing technical solution, there are various approaches to obtaining a recognition result to be used corresponding to the target object which is determined by at least one terminal device, each of which will be described below.

In order to avoid the problem of unclear picture content or failure to effectively recognize the target object due to the difference in external lighting and capture angle, the target recognition result corresponding to the image to be processed may be determined in conjunction with recognition results of other terminal devices, which increases the accuracy of determining the target recognition result.

A first one may be obtaining a recognition result to be used corresponding to the target object by processing, based on the at least one terminal device, a collected image to be processed including the target object.

As an example, other user may also capture the image to be processed including the target object and determine a recognition result to be used corresponding to the target object, by using a corresponding terminal device.

A second one may be determining the recognition result to be used based on a recognition result to be used corresponding to the target object which is received by the at least one terminal device.

It may be understood that the staff (or volunteers) may upload the indicator light state of the indicator lights based on the corresponding application software, or obtain the indicator light laws of multiple indicator lights in advance to get a corresponding indicator light state at different moments, and use the indicator light state as the recognition result to be used.

A third one may be determining the recognition result to be used based on map data information corresponding to the target user.

It may be understood that related navigation software may display traffic lights and other information, and the recognition result to be used corresponding to the target object in the current position information may be determined in conjunction with the map data.

S430, updating a target recognition result output by the image processing model, based on the recognition result to be used and the target recognition result.

As an example, corresponding weight values may be assigned to different recognition results to be used and the target recognition result, a new target recognition result may be determined based on the weight and score of the target recognition result as well as the weights and scores of the recognition results to be used, and the previously determined target recognition result may be updated based on the new target recognition result.

S440, retrieving a target prompt content corresponding to the target recognition result to prompt a target user based on the target prompt content.

Based on the foregoing technical solution, the target object corresponds to traffic lights, the target recognition result comprises a pass state, and receiving the target prompt content corresponding to the target recognition result comprises: under the condition that the pass state is an impassable state, determining the target prompt content to be a first vibration frequency and an audio message corresponding to the impassable state; and under the condition that the pass state is a passable state, determining the target prompt content to be a second vibration frequency and an audio message corresponding to the passable state.

As an example, the audio message corresponding to the impassable state may be "it is currently impassable, please wait", and the first vibration frequency may be a continuous vibration. The audio message corresponding to the passable state may be "it is currently passable, please pass as soon as possible", and the second vibration frequency may be an intermittent vibration. In this way, different target recognition results correspond to different prompt modes, which can achieve the effect of effectively prompting the user.

Based on the foregoing technical solution, prompting the target user based on the target prompt content comprises: playing a corresponding audio message and controlling a terminal device corresponding to the target user to vibrate at a corresponding vibration frequency.

As an example, if the current pass state is impassable, then the terminal device used by the user reports the audio message of the impassable state by voice and reminds the user not to pass through by continuous and uninterrupted vibration, so as to avoid danger to the user. Accordingly, if the current pass state is passable, then a prompt is performed to the user to pass through as soon as possible by voice announcements, and the terminal is caused to vibrate at the second vibration frequency which may be set to correspond to the step frequency of most user movements.

With the technical solution provided by the embodiment of the present disclosure, during determining a target recognition result corresponding to the target object, the target recognition result may be updated in conjunction with recognition results of other terminal devices, thereby increasing the accuracy of the target recognition result.

Based on the foregoing various technical solutions, when providing a prompt based on a voice message, corresponding language types can be used, such as dialects, language types corresponding to different countries, etc., so as to achieve the technical effect of personalized prompting.

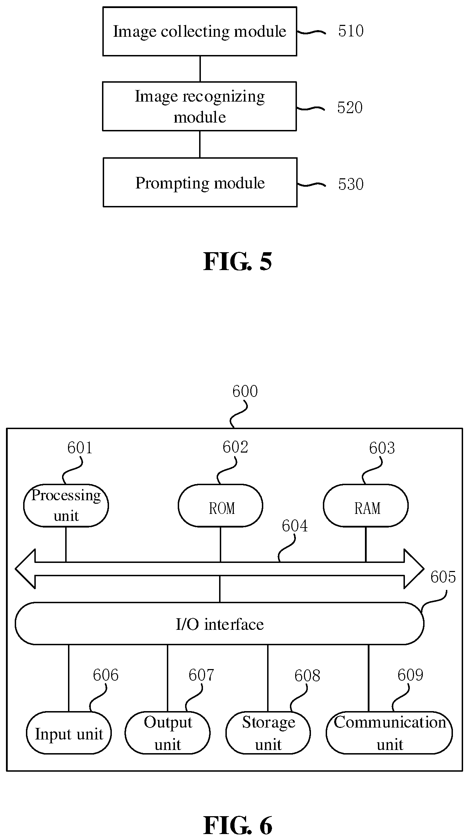

FIG. 5 is a structural block diagram of an apparatus for image processing provided by an embodiment of the present disclosure. The apparatus can perform the method for image processing provided by any of the embodiments of the present disclosure, with corresponding functional modules and effect of performing the method. As shown in FIG. 5, the apparatus comprises: an image collecting module 510, an image recognizing module 520 and a prompting module 530.

the image collecting module 510 configured to initiate a camera apparatus to capture, in response to detecting a triggering operation on a display interface and based on the camera device, an image to be processed including a target object;
the image recognizing module 520 configured to determine a target recognition result corresponding to the target object by analyzing the image to be processed; and
the prompting module configured to retrieve a target prompt content corresponding to the target recognition result to prompt a target user based on the target prompt content.

Based thereon, the apparatus for image processing further comprises:
a current information obtaining module configured to obtain current position information of the target user; and
a current position information comparing module configured to, in response to determining that the current position information corresponds to at least one piece of preset position information, detect a triggering operation of the target user on the display interface.

Based thereon, the apparatus for image processing further comprises:
a target moving subject position comparing module configured to, in response to detecting that current position information of a target moving subject corresponds to target position information of the target user, detect a triggering operation of the target user on the display interface.

Based thereon, the apparatus for image processing further comprises:
an application program initiating module configured to, before detecting the triggering operation of the target user on the display interface, initiate a target application to enter a main interface of the target application, and initiate the camera apparatus in response to detecting a triggering operation of the target user on the main interface;
wherein the main interface corresponds to the display interface.

Based thereon, the apparatus for image processing further comprises:
an application program prompting module configured to, after initiating the target application, perform a program startup prompt to the target user to trigger an operation on the display interface based on the program startup prompt;
wherein the program startup prompt comprises at least one of: a voice prompt, or a vibration prompt, and a content of the voice prompt comprises at least one of: a content of a triggering operation of initiating the camera device, and/or a content prompt for entering a startup interface.

Based thereon, the display interface as a whole corresponds to an operation control.

Based thereon, the image collecting module 510 comprises:
a single-click detecting module configured to initiate the camera apparatus in response to detecting a single-click operation on the display interface;
a double-click detecting module configured to initiate the camera apparatus in response to detecting a double-click operation on the display interface;
a camera detecting module configured to initiate the camera apparatus in response to detecting that a press duration on the display interface reaches a preset duration threshold;
a trajectory detecting module configured to initiate the camera apparatus in response to detecting that a touch trajectory on the display interface meets a preset trajectory; and
a posture detecting module configured to initiate the camera apparatus in response to detecting that a hand posture on the display interface corresponds to at least one preset posture.

Based thereon, the image recognizing module 520 comprises:
a model recognizing module configured to recognize a target object in the image to be processed based on a pretrained image processing model, so as to obtain a target recognition result corresponding to the target object.

Based thereon, the target object is traffic lights, and the model recognizing module comprises:
a pass state recognizing unit configured to input the image to be processed to the image processing model to determine a pass state corresponding to the traffic lights based on the image processing model, and use the passage state as the target recognition result;
wherein the pass state comprises a passable state or an impassable state.

Based thereon, the target object is a target vehicle or text message, and the model recognizing module further comprises:
a vehicle or text recognizing unit configured to recognize a text content or vehicle message of the target object in the image to be processed based on the image processing model, so as to obtain a target recognition result corresponding to the target object.

Based thereon, the apparatus for image processing further comprises:
a recognition-result-to-be-used obtaining module configured to obtain a recognition result to be used corresponding to the target object which is determined by at least one terminal device; and
a target recognition result updating module configured to update a target recognition result output by the image processing model, based on the recognition result to be used and the target recognition result.

Based thereon, the recognition-result-to-be-used obtaining module comprises:
a collecting unit configured to obtain a recognition result to be used corresponding to the target object by processing, based on the at least one terminal device, a collected image to be processed including the target object;
a recognizing unit configured to determine the recognition result to be used based on a recognition result to be used corresponding to the target object which is received by the at least one terminal device; and/or
a determining unit configured to determine the recognition result to be used based on map data information corresponding to the target user.

Based thereon, the target object corresponds to traffic lights, the target recognition result comprises a pass state, and the prompting module 530 comprises:
a first prompt content determining unit configured to, under the condition that the pass state is an impassable state, determine the target prompt content to be a first vibration frequency and an audio message corresponding to the impassable state; and
a second prompt content determining unit configured to, under the condition that the pass state is a passable state, determine the target prompt content to be a second vibration frequency and an audio message corresponding to the passable state.

Based thereon, the prompting module 530 comprises:
a prompting unit configured to play an audio message corresponding to the passage state and control a terminal device corresponding to the target user to vibrate at a vibration frequency corresponding to the passage state.

Based thereon, the apparatus for image processing further comprises:
a returning module configured to, in response to detecting that a triggering operation on the capture interface satisfies a condition of returning to the display interface from the capture interface, return to the display interface, and report a prompt message of returning to the display interface.

According to the technical solution provided by the embodiment of the present disclosure, in response to detecting a triggering operation on a display interface, a camera apparatus is initiated to capture, based on the camera device, an image to be processed including a target object; a target recognition result corresponding to the target object is determined by analyzing the image to be processed; and further, a target prompt content corresponding to the target recognition result is retrieved to prompt a target user based on the target prompt content. In this way, problems of inaccurate recognition of images, inability to effectively prompt based on recognition results, as well as in poor universality can be solved. Since the image content can be effectively recognized, a corresponding prompt content can be determined based on the recognition result so as to prompt the user based on the prompt content, which improves the effectiveness and universality of prompts.

The apparatus for image processing provided by the embodiment of the present disclosure can perform the method for image processing provided by any of the embodiments of the present disclosure, which includes corresponding functional modules for performing the method and has the advantageous effects.

The respective units and modules included in the apparatus are divided based on functional logic, whereas they are not limited to the above-described division so long as they can accomplish corresponding functions. In addition, specific names of the respective functional units are merely for differentiation from each other, rather than limiting the protection scope of the present disclosure.

FIG. 6 is a structural schematic diagram of an electronic device provided by an embodiment of the present disclosure. With reference to FIG. 6 below, this figure shows a structural schematic diagram of an electronic device (e.g., a terminal device or server in FIG. 6) 600 which is applicable to implement the embodiments of the present disclosure. The terminal device in the embodiment of the present disclosure may include a mobile terminal such as a mobile phone, a notebook computer, a digital broadcast receiver, a PDA (personal digital assistant), a PAD (portable Android device), a PMP (portable multimedia player), an on-board terminal (e.g., an on-board navigation terminal), a wearable terminal device and the like, and a fixed terminal such as digital TV, a desktop computer and the like. The electronic device shown in FIG. 6 is merely an example and should not be construed as bringing any restriction on the functionality and usage scope of the embodiments of the present disclosure.

As shown in FIG. 6, the electronic device 600 may comprise a processing unit (e.g., a central processor, a graphics processor) 601 which is capable of performing various appropriate actions and processes as described in the embodiments of the present disclosure in accordance with programs stored in a read only memory (ROM) 602 or programs loaded from a storage unit 608 to a random-access memory (RAM) 603. In the RAM 603, there are also stored various programs and data required by the electronic device 600 when operating. The processing unit 601, the ROM 602 and the RAM 603 are connected to one another via a bus 604. An input/output (I/O) interface 605 is also connected to the bus 604.

Typically, the following units may be connected to the I/O interface 605: an input unit 606 including, for example, a touchscreen, a touch pad, a keyboard, a mouse, a camera, a microphone, an accelerometer, a gyroscope and the like; an output unit 607 including, for example, a Liquid Crystal Display (LCD), a loudspeaker, a vibrator and the like; a storage unit 608 including, for example, a tape, a hard drive and the like; and a communication unit 609. The communication unit 609 can allow wireless or wired communication of the electronic device 600 with other devices to exchange data.

According to embodiments of the present disclosure, the processes described above with reference to the flowcharts may be implemented as computer software programs. For example, embodiments of the present disclosure include a computer program product comprising a computer program carried on a non-transitory computer readable medium, the computer program containing program code for performing the methods as in the flowcharts. In those embodiments, the computer program may be downloaded and installed from a network via the communication unit 609, or may be installed from the storage unit 608, or may be installed from the ROM 602. The computer program, when executed by the processor 601, performs the above-described functions defined in the virtual resource processing method according to the embodiments of the present disclosure.

Names of messages or information interacted between a plurality of apparatuses in the implementations of the present application are merely for the illustration purpose, rather than limiting the scope of these messages or information.

The electronic device provided in this embodiment of the present disclosure belongs to the same concept as the method for image processing provided in the foregoing embodiments, technical details which are not elaborated in this embodiment may refer to the foregoing embodiment, and this embodiment has the same effect as the foregoing embodiment.

Embodiments of the present disclosure further provide a computer storage medium storing a computer program thereon. The computer program, when executed by a processor, implements the method for image processing provided in the foregoing embodiments.

The computer readable medium according to the present disclosure may be a computer readable signal medium or a computer readable storage medium or any combination of the two. The computer readable storage medium may be, for example, but not limited to, an electronic, magnetic, optical, electromagnetic, infrared, or semiconductor system, apparatus, or device, or any combination of the foregoing. More specific examples of the computer readable storage medium may include, but are not limited to: an electrical connection having one or more wires, a portable computer diskette, a hard disk, a RAM, an ROM, an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium may be any tangible medium that can contain, or store, a program for use by or in connection with an instruction execution system, apparatus, or device. In contrast, in the present disclosure, a computer readable signal medium may include a propagated data signal with computer readable program code embodied therein, either in baseband or as part of a carrier wave. Such propagated data signal may take many forms, including, but not limited to, an electro-magnetic signal, an optical signal, or any suitable combination thereof. A computer readable signal medium may also be any computer readable medium that is not a computer readable storage medium and that can communicate, propagate, or transmit a program for use by or in connection with an instruction execution system, apparatus, or device. Program code embodied on a computer readable medium may be transmitted using any appropriate medium, including but not limited to: electrical wires, optical cables, RF (radio frequency), etc., or any suitable combination of the foregoing.

In some embodiments, the client and the server may perform communication by using any known network protocol such as Hyper Text Transfer Protocol (HTTP) or any network protocol to be developed, and may connect with digital data in any form or carried in any medium (for example, a communication network). The communication network includes a local area network (LAN), a wide area network (WAN), an international network (for example, the internet), a peer-to-peer network (e.g. ad hoc peer-to-peer network), and any known network or network to be developed.

The computer-readable medium may be the one included in the electronic device, or may be provided separately, rather than assembled in the electronic device.

The computer-readable medium carries one or more programs which, when executed by the electronic device, cause the electronic device to:

in response to detecting a triggering operation on a display interface, initiate a camera apparatus to capture, based on the camera device, an image to be processed including a target object; determine a target recognition result corresponding to the target object by analyzing the image to be processed; and retrieve a target prompt content corresponding to the target recognition result to prompt a target user based on the target prompt content.

Computer program codes for carrying out operations of the present disclosure may be written in one or more programming languages, including without limitation to, an object-oriented programming language such as Java, Smalltalk, C++ or the like, and conventional procedural programming languages, such as the "C" programming language or similar programming languages. The program codes may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

The flowchart and block diagrams in the figures illustrate the architecture, functionality, and operation of possible implementations of systems, methods and computer program products according to various implementations of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

The modules described in the embodiments of the present disclosure may be implemented as software or hardware, wherein the name of a unit does not form any limitation to the unit per se in some case.

The functions described above may be executed, at least in part, by one or more hardware logic components. For example, and without limitation, illustrative types of hardware logic components that can be used include Field-programmable Gate Arrays (FPGAs), Application-specific Integrated Circuits (ASICs), Application-specific Standard Products (ASSPs), System-on-a-chip systems (SOCs), Complex Programmable Logic Devices (CPLDs), etc.

In the context of the present disclosure, the machine readable medium may be a tangible medium, which may include or store a program used by an instruction executing system, apparatus or device or used in conjunction with the foregoing. The machine-readable medium may be a machine-readable signal medium or a machine-readable storage medium. The machine-readable medium may include, but is not limited to, an electronic, magnetic, optical, electromagnetic, infrared, semiconductor system, means or device, or any suitable combination of the foregoing. More specific examples of the machine-readable storage medium include the following: an electric connection with one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

According to one or more embodiments of the present disclosure, a first example provides a method for image processing, comprising:
in response to detecting a triggering operation on a display interface, initiating a camera apparatus to capture, based on the camera device, an image to be processed including a target object;
determining a target recognition result corresponding to the target object by analyzing the image to be processed; and
retrieving a target prompt content corresponding to the target recognition result to prompt a target user based on the target prompt content.

According to one or more embodiments of the present disclosure, a second example provides a method for image processing, further comprising:
obtaining current position information of the target user; and
in response to determining that the current position information corresponds to at least one piece of preset position information, detecting a triggering operation of the target user on the display interface.

According to one or more embodiments of the present disclosure, a third example provides a method for image processing, further comprising:
in response to detecting that current position information of a target moving subject corresponds to target position information of the target user, detecting a triggering operation of the target user on the display interface.

According to one or more embodiments of the present disclosure, a fourth example provides a method for image processing, further comprising:
optionally, before detecting the triggering operation of the target user on the display interface, further comprising:
initiating a target application to enter a main interface of the target application, and initiating the camera apparatus in response to detecting a triggering operation of the target user on the main interface;
wherein the main interface corresponds to the display interface.

According to one or more embodiments of the present disclosure, a fifth example provides a method for image processing, further comprising:
optionally, after initiating the target application, further comprising:
performing a program startup prompt to the target user to trigger an operation on the display interface based on the program startup prompt;
wherein the program startup prompt comprises at least one of: a voice prompt, or a vibration prompt, and a content of the voice prompt comprises at least one of: a content of a triggering operation of initiating the camera device, or a content prompt for entering a startup interface.

According to one or more embodiments of the present disclosure, a sixth example provides a method for image processing, further comprising:
optionally, the display interface as a whole corresponds to an operation control.

According to one or more embodiments of the present disclosure, a seventh example provides a method for image processing, further comprising:
optionally, initiating the camera apparatus in response to detecting the triggering operation on the display interface comprises:
initiating the camera apparatus in response to detecting a single-click operation on the display interface; and/or
initiating the camera apparatus in response to detecting a double-click operation on the display interface; and/or
initiating the camera apparatus in response to detecting that a press duration on the display interface reaches a preset duration threshold; and/or
initiating the camera apparatus in response to detecting that a touch trajectory on the display interface meets a preset trajectory; and/or
initiating the camera apparatus in response to detecting that a hand posture on the display interface corresponds to at least one preset posture.

According to one or more embodiments of the present disclosure, an eight example provides a method for image processing, further comprising:
optionally, determining the target recognition result corresponding to the target object by analyzing the image to be processed comprises:
recognizing a target object in the image to be processed based on a pretrained image processing model, so as to obtain a target recognition result corresponding to the target object.

According to one or more embodiments of the present disclosure, a ninth example provides a method for image processing, further comprising:
optionally, the target object is traffic lights, and recognizing the target object in the image to be processed based on the pretrained image processing model to obtain the target recognition result corresponding to the target object comprises:
inputting the image to be processed to the image processing model to determine a pass state corresponding to the traffic lights based on the image processing model, and using the passage state as the target recognition result;
wherein the pass state comprises a passable state or an impassable state.

According to one or more embodiments of the present disclosure, a tenth example provides a method for image processing, further comprising:
optionally, the target object is a target vehicle or text message, and recognizing the target object in the image to be processed based on the pretrained image processing model to obtain the target recognition result corresponding to the target object comprises:
recognizing a text content or vehicle message of the target object in the image to be processed based on the image processing model, so as to obtain a target recognition result corresponding to the target object.

According to one or more embodiments of the present disclosure, an eleventh example provides a method for image processing, further comprising:
obtaining a recognition result to be used corresponding to the target object which is determined by at least one terminal device; and
updating a target recognition result output by the image processing model, based on the recognition result to be used and the target recognition result.

According to one or more embodiments of the present disclosure, a twelfth example provides a method for image processing, further comprising:
optionally, obtaining the recognition result to be used corresponding to the target object which is determined by at least one terminal device comprises:
obtaining a recognition result to be used corresponding to the target object by processing, based on the at least one terminal device, a collected image to be processed including the target object; and/or
determining the recognition result to be used based on a recognition result to be used corresponding to the target object which is received by the at least one terminal device; and/or
determining the recognition result to be used based on map data information corresponding to the target user.

According to one or more embodiments of the present disclosure, a thirteenth example provides a method for image processing, further comprising:
optionally, the target object corresponds to traffic lights, the target recognition result comprises a pass state, and receiving the target prompt content corresponding to the target recognition result comprises:
under the condition that the pass state is an impassable state, determining the target prompt content to be a first vibration frequency and an audio message corresponding to the impassable state; and
under the condition that the pass state is a passable state, determining the target prompt content to be a second vibration frequency and an audio message corresponding to the passable state.

According to one or more embodiments of the present disclosure, a fourteenth example provides a method for image processing, further comprising:
prompting the target user based on the target prompt content comprises:
playing an audio message corresponding to the passage state and controlling a terminal device corresponding to the target user to vibrate at a vibration frequency corresponding to the passage state.

According to one or more embodiments of the present disclosure, a fifteenth example provides a method for image processing, further comprising:
optionally, after initiating the camera apparatus to enter a capture interface, the method further comprises:
in response to detecting that a triggering operation on the capture interface satisfies a condition of returning to the display interface from the capture interface, returning to the display interface, and reporting a prompt message of returning to the display interface.

According to one or more embodiments of the present disclosure, a sixteenth example provides an apparatus for image processing, further comprising:
an image collecting module configured to initiate a camera apparatus to capture, in response to detecting a triggering operation on a display interface and based on the camera device, an image to be processed including a target object;
an image recognizing module configured to determine a target recognition result corresponding to the target object by analyzing the image to be processed; and
a prompting module configured to retrieve a target prompt content corresponding to the target recognition result to prompt a target user based on the target prompt content.

Further, while operations are depicted in a particular order, this should not be understood as requiring that such operations be performed in the particular order shown or in sequential order. In certain circumstances, multitasking and parallel processing may be advantageous. Likewise, while several specific implementation details are contained in the above discussions, these should not be construed as limitations on the scope of the present disclosure, but rather as descriptions of features that may be specific to particular implementations. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it is to be understood that the present disclosure specified in the appended claims is not necessarily limited to the specific features or acts described above. Rather, the specific features and acts described above are disclosed as example forms of implementing the claims.

## Claims

1. An image processing method, comprising:
in response to detecting a triggering operation on a display interface, initiating a camera apparatus to capture, based on the camera apparatus, an image to be processed including a target object;
determining a target recognition result corresponding to the target object by analyzing the image to be processed; and
retrieving target prompt content corresponding to the target recognition result to prompt a target user based on the target prompt content.

2. The method of claim 1, further comprising:
obtaining current position information of the target user; and
in response to determining that the current position information corresponds to at least one piece of preset position information, detecting a triggering operation of the target user on the display interface.

3. The method of claim 1, further comprising:
in response to detecting that current position information of a target moving subject corresponds to target position information of the target user, detecting a triggering operation of the target user on the display interface.

4. The method of claim 2 or 3, wherein before detecting the triggering operation of the target user on the display interface, the method further comprises:
initiating a target application to enter a main interface of the target application, and initiating the camera apparatus in response to detecting a triggering operation of the target user on the main interface;
wherein the main interface corresponds to the display interface.

5. The method of claim 4, wherein after initiating the target application, the method further comprises:
performing a program startup prompt to the target user to trigger an operation on the display interface based on the program startup prompt;
wherein the program startup prompt comprises at least one of: a voice prompt, or a vibration prompt, and content of the voice prompt comprises at least one of: content of a triggering operation of initiating the camera apparatus, or a content prompt for entering a startup interface.

6. The method of claim 1, wherein the display interface as a whole corresponds to an operation control.

7. The method of claim 1, wherein initiating the camera apparatus in response to detecting the triggering operation on the display interface comprises at least one of:
initiating the camera apparatus in response to detecting a single-click operation on the display interface;
initiating the camera apparatus in response to detecting a double-click operation on the display interface;
initiating the camera apparatus in response to detecting that a press duration on the display interface reaches a preset duration threshold;
initiating the camera apparatus in response to detecting that a touch trajectory on the display interface meets a preset trajectory; or
initiating the camera apparatus in response to detecting that a hand posture on the display interface corresponds to at least one preset posture.

8. The method of claim 1, wherein determining the target recognition result corresponding to the target object by analyzing the image to be processed comprises:
recognizing a target object in the image to be processed based on a pretrained image processing model, so as to obtain a target recognition result corresponding to the target object.

9. The method of claim 8, wherein the target object is traffic lights, and recognizing the target object in the image to be processed based on the pretrained image processing model, so as to obtain the target recognition result corresponding to the target object comprises:
inputting the image to be processed into the image processing model to determine a pass state corresponding to the traffic lights based on the image processing model, and using the pass state as the target recognition result;
wherein the pass state comprises a passable state or an impassable state.

10. The method of claim 8, wherein the target object is a target vehicle or a text message, and recognizing the target object in the image to be processed based on the pretrained image processing model to obtain the target recognition result corresponding to the target object comprises:
recognizing text content or a vehicle message of the target object in the image to be processed based on the image processing model, so as to obtain a target recognition result corresponding to the target object.

11. The method of claim 8, further comprising:
obtaining a recognition result to be used corresponding to the target object which is determined by at least one terminal device; and
updating a target recognition result output by the image processing model, based on the recognition result to be used and the target recognition result.

12. The method of claim 11, wherein obtaining the recognition result to be used corresponding to the target object which is determined by the at least one terminal device comprises at least one of:
obtaining a recognition result to be used corresponding to the target object by processing, based on the at least one terminal device, a collected image to be processed including the target object; or
determining the recognition result to be used based on a recognition result to be used corresponding to the target object which is received by the at least one terminal device; or
determining the recognition result to be used based on map data information corresponding to the target user.

13. The method of claim 1, wherein the target object corresponds to traffic lights, the target recognition result comprises a pass state, and receiving the target prompt content corresponding to the target recognition result comprises:
under the condition that the pass state is an impassable state, determining the target prompt content to be a first vibration frequency and audio information corresponding to the impassable state; and
under the condition that the pass state is a passable state, determining the target prompt content to be a second vibration frequency and audio information message corresponding to the passable state.

14. The method of claim 13, wherein prompting the target user based on the target prompt content comprises:
playing corresponding audio information and controlling a terminal device corresponding to the target user to vibrate at a vibration frequency.

15. The method of claim 1, wherein after initiating the camera apparatus to enter a capture interface, the method further comprises:
in response to detecting that a triggering operation on the capture interface satisfies a condition of returning to the display interface from the capture interface, returning to the display interface, and reporting prompt information of returning to the display interface.

16. An image processing apparatus, comprising:
an image collecting module configured to initiate a camera apparatus to capture, in response to detecting a triggering operation on a display interface and based on the camera apparatus, an image to be processed including a target object;
an image recognizing module configured to determine a target recognition result corresponding to the target object by analyzing the image to be processed; and
a prompting module configured to retrieve target prompt content corresponding to the target recognition result to prompt a target user based on the target prompt content.

17. An electronic device, comprising:
one or more processors;
a storage apparatus configured to store one or more programs,
wherein the one or more programs, when executed by the one or more processors, cause the one or more processors to implement the image processing method of any of claims 1 to 15.

18. A storage medium comprising computer-executable instructions, wherein the computer-executable instructions, when executed by a computer processor, perform the image processing method of any of claims 1 to 15.
